# EUROPEAN PATENT SPECIFICATION

(11) **EP 3 552 909 B1**
(45) Date of publication and mention of the grant of the patent: **02.07.2025**
(21) Application number: 19167263.3
(22) Date of filing: 04.04.2019
(51) Int. Cl.: B60W 50/08, B60W 30/182, B60W 40/08, B60W 60/00, B60K 35/10

(54) **APPARATUS AND METHOD FOR MANAGING CONTROL AUTHORITY TRANSITION IN VEHICLE**
VORRICHTUNG UND VERFAHREN ZUR VERWALTUNG DES KONTROLLAUTORITÄTSÜBERGANGS IN EINEM FAHRZEUG
APPAREIL ET PROCÉDÉ DE GESTION DE TRANSITION DE L'AUTORITÉ DE CONTRÔLE DANS UN VÉHICULE

(30) Priority: 11.04.2018 US 201862655831 P; 01.02.2019 KR 20190013933
(43) Date of publication of application: 16.10.2019
(73) Proprietor: Hyundai Motor Company, Seoul 06797 (KR); Kia Corporation, Seocho-gu Seoul 06797 (KR)
(72) Inventor: Yang, Na Eun, Gyeonggi-do 18280 (KR); Jeong, Jin Su, Gyeonggi-do 18280 (KR); Lee, Seung Yong, Gyeonggi-do 18280 (KR); Chae, Su Hong, Gyeonggi-do 18280 (KR); Choi, Tae Sung, Gyeonggi-do 18280 (KR)
(74) Representative: Hoffmann Eitle

(56) References cited:
- EP-A1- 3 330 148
- WO-A1-2017/018133
- DE-A1- 102016 007 187
- JP-A- 2016 151 815
- US-A1- 2017 240 186

## Description

### CROSS-REFERENCE TO RELATED APPLICATION

The present application claims priority to and the benefit of Korean Patent Application No. 10-2019-0013933, filed on February 1, 2019, which claims priority to and the benefit of US Patent Application No. 62/655,831, filed on April 11, 2018.

### TECHNICAL FIELD

The present invention relates to an apparatus and method for determining whether to hand over control authority depending on a situation in an autonomous vehicle.

### BACKGROUND

The statements in this section merely provide background information related to the present invention and may not constitute prior art.

With the development of the auto industry, an autonomous system and a driving assistance system which facilitates partially autonomous driving (hereinafter, for convenience of description, both of autonomous driving and driving assistance are referred to as "autonomous driving") have been developed. The autonomous system may provide a variety of functions, for example, setting speed keeping, vehicle-to-vehicle distance keeping (e.g., cruise control), lane keeping, and a lane change. The autonomous system may perform autonomous driving using various devices such as a sensor for sensing environments outside the vehicle, a sensor for sensing information about the vehicle, a global positioning system (GPS), map information, a driver state monitoring system, a steering actuator, an acceleration/deceleration actuator, a communication circuit, and a control circuit (e.g., an electronic control unit (ECU)). The autonomous system may be enabled according to an input of a driver. When a problem occurs or when the occurrence of the problem is predicted, the autonomous system may provide a notification of control authority transition to the driver. When the driver takes over control authority, the autonomous system may be released.

When control (override) by the driver greatly departs from control by the autonomous system, control authority transition may be prohibited. For example, when a steering angle of a steering wheel operated by the driver increases to more than a specified value or when a vehicle speed increases to more than a specified value, control authority transition may be prohibited. However, prohibiting control authority transition according to the above-mentioned uniform criteria may fail to be suitable for the safety of the driver. Thus, there is a need for developing a determination method for suitably prohibiting control authority transition.
JP 2016 151815 A relates to a driving support device of a vehicle capable of switching between automatic driving and manual driving. The driving support device that performs automatic driving includes a driving switching unit and an override detection unit that detects an override by a driver of the vehicle. The driving support device switches the driving mode from automatic driving to manual driving based on the override detected by the override detection unit, and sequentially determines whether the driver of the vehicle lacks concentration.
DE 10 2016 007 187 A1 relates to a method for deactivating an automated driving function of a vehicle and driver assistance system for carrying out the method. According to the method, an automated driving function of a vehicle can be deactivated. In particular, the driving function is deactivated if a driver of the vehicle makes a steering intervention or pedal intervention over a predetermined deactivation threshold. That is, if the driver intervenes in driving operations to such an extent that a pre-defined deactivation threshold is exceeded, the driving function is deactivated and the driving task is transferred back to the driver.
WO 2017/018133 A1 relates to an automatic driving system for vehicles. This automatic driving system safely switches a vehicle from an automatic driving mode to a manual driving mode. An automatic driving control unit of the system comprises: a driven action determination unit, a steering system and a braking system. A driver's state determination unit determines the state of a driver from biometric information which is obtained from the image of the driver's face captured by a face image camera and the body pressure of the driver and its variation detected by body pressure sensors of a driver's seat.
US 2017/240186 A1 relates to a vehicle control system. The system comprises a switching control unit for switching the driving mode on the basis of a driving mode specifying signal. The switching control unit also switches the driving mode on the basis of an operation of the operation device for instructing acceleration, deceleration, or steering.

### SUMMARY

At least some of the above problems are solved by the independent claims which allow for suitably prohibiting control authority transition.
Specifically, the invention achieves this by providing the apparatus according to claim 1 and the method according to claim 12 for determining whether to hand over control authority in consideration of a state of a driver and reliability of a control input by the driver.

The technical problems to be solved by the present inventive concept are not limited to the aforementioned problems, and any other technical problems not mentioned herein will be clearly understood from the following description by those skilled in the art to which the present disclosure pertains.

According to an aspect of the present invention, an apparatus for managing control authority transition in a vehicle may include: a steering device, an acceleration device, a deceleration device, a sensor configured to sense information about a driver of the vehicle, and a control circuit configured to be electrically connected with the steering device, the acceleration device, the deceleration device, and the sensor. The control circuit is configured to obtain state information about the driver using the sensor, when performing autonomous control, receive, from the driver, a control input to at least one of the steering device, the acceleration device, or the deceleration device; calculate an expected path of the vehicle based on the control input; determine a probability of collision of the vehicle based on the expected path and a location of an external object; verify whether the driver is conscious and sits in the driver's seat; when it is verified that the driver is conscious and sits in the driver's seat, determine a reliability of the control input, wherein the reliability of the control input is determined as being high, when there is no probability of collision or the determined probability of collision is lower than a risk of collision on a path by the autonomous control; determine whether to transfer a control authority based on the state information and the reliability of the control input; and transfer, to the driver, the control authority, when it is determined to transfer the control authority, when the reliability of the control input is high.

In some forms of the present invention, the sensor may include a camera. The control circuit may be configured to obtain the state information by analyzing an image of the driver, the image being obtained by the camera.

In some forms of the present invention, the state information may include information associated with a line of sight of the driver and information associated with driver seating.

According to the present invention, the reliability of the control input includes information about a probability of collision by the control input.

In some forms of the present invention, the control circuit may be configured to calculate an expected path of the vehicle based on the control input and determine a probability of collision of the vehicle based on the expected path.

In some forms of the present invention, the control circuit may be configured to prohibit the control authority transition, when it is impossible to hand over the control authority.

In some forms of the present invention, the apparatus may further include an input device configured to be electrically connected with the control circuit. The control circuit may be configured to immediately hand over the control authority to the driver, when an input for the control authority transition is received via the input device.

In some forms of the present invention, the apparatus may further include an input device configured to be electrically connected with the control circuit. The control circuit may be configured to resume performing the autonomous control, after the control authority is handed over, when the control input of the driver is stopped or when an input for the autonomous control is received via the input device.

In some forms of the present invention, the control circuit may be configured to hand over the control authority to the driver, when pupils of the driver and driver seating are detected and when there is no probability of collision by the control input.

In some forms of the present invention, the control circuit may be configured to prohibit the control authority transition, when pupils of the driver and driver seating are detected and when there is a probability of collision by the control input.

In some forms of the present invention, the control circuit may be configured to prohibit the control authority transition, when pupils of the driver are not detected.

In some forms of the present invention, the control circuit may be configured to perform the autonomous control according to a predetermined minimum risk maneuver (MRM), when driver seating is not detected.

According to another aspect of the present invention, a method for managing control authority transition in a vehicle according to independent method claim 12 is disclosed.

In some forms of the present invention, the state information may include information associated with a line of sight of the driver and information associated with driver seating.

In some forms of the present invention, the reliability of the control input may include information about a probability of collision by the control input.

Further areas of applicability will become apparent from the description provided herein. It should be understood that the description and specific examples are intended for purposes of illustration only and are not intended to limit the scope of the present invention.

### DRAWINGS

In order that the disclosure may be well understood, there will now be described various forms thereof, given by way of example, reference being made to the accompanying drawings, in which:
FIG. 1 is a block diagram illustrating a configuration of an apparatus for managing control authority transition in a vehicle;
FIG. 2 is a block diagram illustrating a configuration of an apparatus for managing control authority transition in a vehicle;
FIG. 3 is a drawing illustrating a criterion of determining whether to hand over control authority in an apparatus for managing control authority transition in a vehicle;
FIG. 4 is a drawing illustrating an exemplary operation of an apparatus for managing control authority transition in a vehicle;
FIG. 5 is a flowchart illustrating a method for managing control authority transition in a vehicle;
FIG. 6 is a flowchart illustrating a method for managing control authority transition in a vehicle; and
FIG. 7 is a block diagram illustrating a configuration of a computing system.

The drawings described herein are for illustration purposes only and are not intended to limit the scope of the present invention in any way.

### DETAILED DESCRIPTION

The following description is merely exemplary in nature and is not intended to limit the present invention, application, or uses. It should be understood that throughout the drawings, corresponding reference numerals indicate like or corresponding parts and features.

In describing elements of some forms of the present disclosure, the terms 1^{st}, 2^{nd}, first, second, A, B, (a), (b), and the like may be used herein. These terms are only used to distinguish one element from another element, but do not limit the corresponding elements irrespective of the nature, turn, or order of the corresponding elements. Unless otherwise defined, all terms used herein, including technical or scientific terms, have the same meanings as those generally understood by those skilled in the art to which the present disclosure pertains. Such terms as those defined in a generally used dictionary are to be interpreted as having meanings equal to the contextual meanings in the relevant field of art, and are not to be interpreted as having ideal or excessively formal meanings unless clearly defined as having such in the present application.

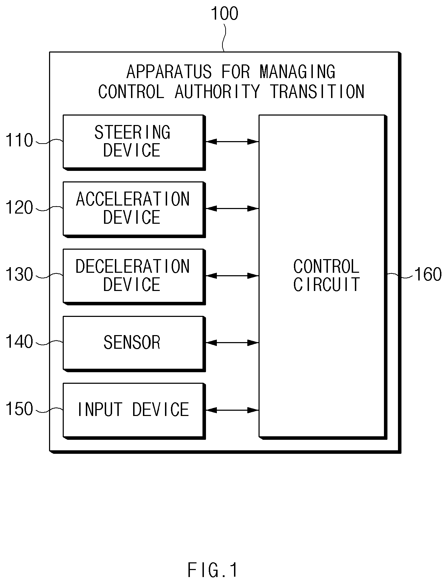

FIG. 1 is a block diagram illustrating a configuration of an apparatus for managing control authority transition in a vehicle in some forms of the present disclosure.

Referring to FIG. 1, an apparatus 100 for managing control authority transition in a vehicle in some forms of the present disclosure may include a steering device 110, an acceleration device 120, a deceleration device 130, a sensor 140, an input device 150, and a control circuit 160. The apparatus 100 for managing the control authority transition in FIG. 1 may be a portion of an autonomous system and may be loaded into the vehicle.

The steering device 110 may be configured to control a steering angle of the vehicle. The steering device 110 may include, for example, a steering wheel, an actuator interlocked with the steering wheel, and a controller for controlling the actuator and may be controlled by a driver of the vehicle and/or the autonomous system.

The acceleration device 120 may be configured to control acceleration of the vehicle. The acceleration device 120 may include, for example, a throttle, an actuator interlocked with the throttle, and a controller for controlling the actuator and may be controlled by the driver and/or the autonomous system.

The deceleration device 130 may be configured to control deceleration of the vehicle. The deceleration device 130 may include, for example, a brake, an actuator interlocked with the brake, and a controller for controlling the actuator and may be controlled by the driver and/or the autonomous system.

The sensor 140 may be configured to sense information about the outside and inside of the vehicle. For example, the sensor 140 may sense information about the driver. The sensor 140 may include a camera for capturing an image of the driver and may include a sensor for sensing whether the driver sits in the driver's seat. For another example, the sensor 140 may include a radar, a light detection and ranging (LiDAR), a camera, and the like, for sensing an environment outside the vehicle, and may include a wheel speed sensor, a yaw rate sensor, an acceleration sensor, a torque sensor, and the like, for sensing a state of the vehicle.

The input device 150 may be configured to receive an input from the driver of the vehicle. For example, the input device 150 may be implemented as a button, a switch, a lever, a touch sensor, a touch panel, or the like.

The control circuit 160 may be electrically connected with the steering device 110, the acceleration device 120, the deceleration device 130, the sensor 140, and the input device 150. The control circuit 160 may control the steering device 110, the acceleration device 120, the deceleration device 130, the sensor 140, and the input device 150 and may perform a variety of data processing and various arithmetic operations. The control circuit 160 may be, for example, an electronic control unit (ECU), a micro controller unit (MCU), or a sub-controller, which is loaded into the vehicle.

In some forms of the present disclosure, while performing autonomous control, the control circuit 160 may obtain state information about the driver using the sensor 140. The state information may include, for example, information associated with a line of sight of the driver and information associated with driver seating. In some forms of the present disclosure, the control circuit 160 may obtain an image of the driver using the sensor 140 (e.g., a camera) and may analyze the image of the driver to obtain state information about the driver. For example, the control circuit 160 may obtain state information about a line of sight of the driver from the image. For another example, the control circuit 160 may determine whether the driver sits in the driver's seat, using the sensor 140, and may obtain state information associated with whether the driver sits in the driver's seat.

In some forms of the present disclosure, the control circuit 160 may receive a control input by the driver to at least some of the steering device 110, the acceleration device 120, or the deceleration device 130. The control circuit 160 may receive a control input of the driver to a steering wheel, a decelerator pedal, or an accelerator pedal. The control circuit 160 may determine reliability of the received control input. In some forms of the present disclosure, the reliability of the control input may include information about a probability of collision by the control input. For example, the control circuit 160 may calculate an expected path of the vehicle by the received control input based on the received control input. The control circuit 160 may determine a probability of collision of the vehicle based on the expected path and a location of an external object. When the probability of collision is high (or when there is the probability of collision), the control circuit 160 may determine that the reliability of the control input is low. When the probability of collision is low (or when there is no probability of collision), the control circuit 160 may determine that the reliability of the control input is high.

In some forms of the present disclosure, the control circuit 160 may determine whether to hand over control authority, based on the state information and the reliability of the control input. When it is determined that the control authority is handed over, the control circuit 160 may hand over the control authority to the driver. When the driver is conscious and when the reliability of the control input is high, the control circuit 160 may determine to hand over the control authority. For example, when pupils of the driver and driver seating are detected and when there is substantially no probability of collision by the control input (or when a probability of collision is low), the control circuit 160 may hand over control authority to the driver.

In some forms of the present disclosure, when it is impossible to hand over the control authority, the control circuit 160 may prohibit control authority transition. When the driver is unconscious or when the reliability of the control input is low, the control circuit 160 may prohibit the control authority transition. For example, when there is a probability of collision by a control input, the control circuit 160 may prohibit the control authority transition. For another example, when pupils of the driver are not detected, the control circuit 160 may prohibit the control authority transition. For another example, when the driver seating is not detected, the control circuit 160 may perform autonomous control according to a predetermined minimum risk maneuver (MRM).

In some forms of the present disclosure, when an input for control authority transition is received via the input device 150, the control circuit 160 may immediately hand over control authority to the driver. Independently of determining whether to hand over the control authority, When a transition demand (TD) is received via a separate input device for control authority transition, the control circuit 160 may immediately hand over the control authority to the driver.

In some forms of the present disclosure, after the control authority is handed over, when the control input of the driver is stopped or when an input for autonomous control is received via the input device 150, the control circuit 160 may resume performing autonomous control. When a control input is stopped for convenience of the driver, the control circuit 160 automatically may initiate autonomous control. When an input for enabling autonomous control is received via the input device 150, the control circuit 160 may initiate the autonomous control.

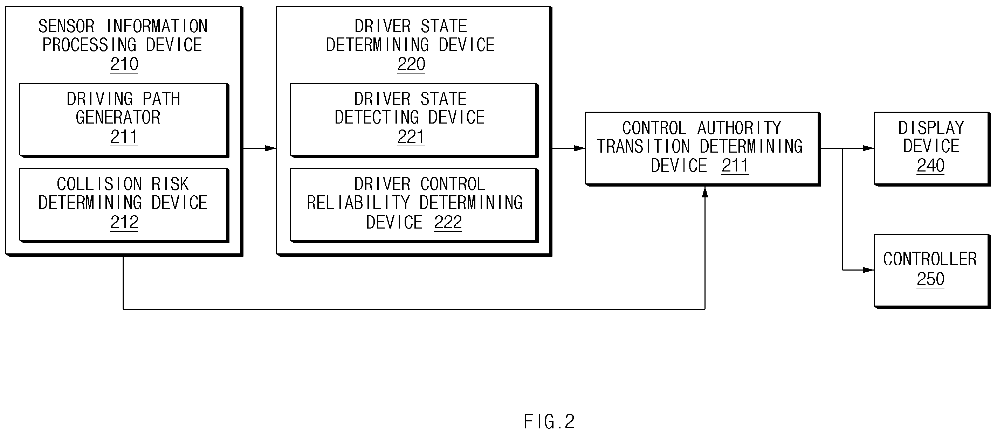

FIG. 2 is a block diagram illustrating a configuration of an apparatus for managing control authority transition in a vehicle in some forms of the present disclosure.

Referring to FIG. 2, the apparatus for managing the control authority transition in the vehicle in some forms of the present disclosure may include a sensor information processing device 210, a driver state determining device 220, a control authority transition determining device 230, a display device 240, and a controller 250. The apparatus for managing the control authority transition may detect a state of a driver, may determine reliability of a control input of the vehicle, and may prevent an unintended dangerous operation of the vehicle to ensure stability of the operation.

The sensor information processing device 210 may generate a driving path and may determine a risk of collision. The sensor information processing device 210 may measure dynamic information (e.g., steering, speed, and the like) for predicting a path of the vehicle depending on the purpose of an autonomous system and may recognize a surrounding environment (e.g., a forward lane, a surrounding object, and the like) to determine safety. The sensor information processing device 210 may include a driving path generator 211 and a collision risk determining device 212.

The driving path generator 211 may generate an expected path under control of the autonomous system and an expected path according to a control input of the driver. The expected path under the control of the autonomous system may be a driving trajectory calculated based on navigation information and may be a path which typically follows the center of a driving lane. The expected path according to the input of the driver may be calculated immediately when the input of the driver occurs.

The collision risk determining device 212 may determine whether a risk of collision occurs from a current time to a specific future time in consideration of all of control inputs of the autonomous system and the driver.

The driver state determining device 220 may monitor a state where the driver sits in the driver's seat and a state where a surrounding situation is recognized to determine whether it is possible for the driver to take over control authority.

A driver state detecting device 221 may analyze an image to recognize a face of the driver. The driver state detecting device 221 may recognize whether a face of the driver is detected, a drowsy state, a line of sight direction, and the like and may monitor a control input for steering, acceleration, deceleration, or the like of the driver, thus determining whether the driver sits in the driver's seat. The driver state detecting device 221 may divide a state of the driver into, for example, four states. For example, the driver state detecting device 221 may determine the state of the driver as a first state where the driver keeps his or her eyes on the road (e.g., where a line of sight of the driver is within a specified range), a second state where the driver does not keep his or her eyes on the road, but where the driver is conscious (e.g., where the line of sight of the driver is out of the specified range), a third state where the driver is unconscious, but where the driver sits in the driver's seat (e.g., pupils of the driver are not recognized, but where the face of the driver is recognized around the driver's seat), or a four state where the driver does not sit in the driver's seat or where it is impossible to determine whether the driver sits in the driver's seat.

A driver control reliability determining device 222 may determine whether it is possible to travel on an expected path based on a control input of the driver without collision. Particularly, the driver control reliability determining device 222 may determine reliability of a strong input capable of guiding the vehicle into a collision within a short time as being low. When there is a risk of collision on a path by the autonomous system, and when a risk of collision on an expected path based on a control input of the driver is lower than a risk of collision on a path by the autonomous system, the driver control reliability determining device 222 may determine the reliability of the control input as being high.

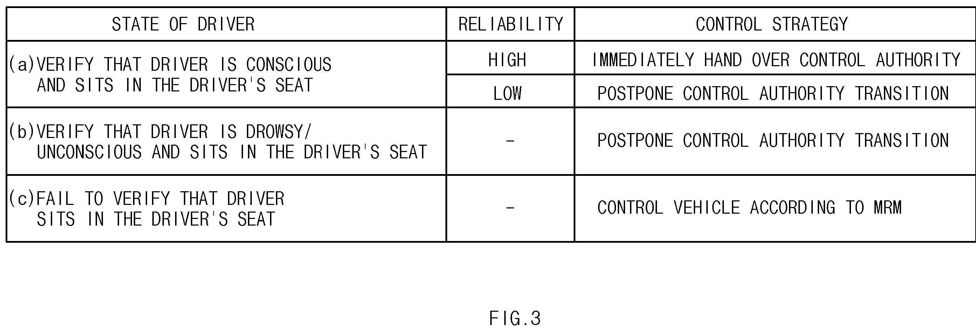

The control authority transition determining device 230 may determine whether to hand over control authority based on the state information of the driver and the reliability of the control input. A description will be given in detail of a detailed determination method with reference to FIG. 3.

The display device 240 may indicate a state of control authority to the driver. The display device 240 may output information indicating whether a control entity of the vehicle is the autonomous system or the driver. When it is necessary to hand over control authority, when the reliability of the control input is low, or when the driver is in an improper state (e.g., when the driver is drowsing, when the driver is out of the driver's seat, or the like), the display device 240 may output a warning notification. The system may additionally notify the driver of the reason why control authority is not handed over, on the display device 240.

The controller 250 may adjust steering and a speed of the vehicle. The controller 250 may control a behavior of the vehicle depending on a command or input of an entity of control authority (e.g., the autonomous system or the driver). The controller 250 may drive an actuator for controlling the behavior of the vehicle.

FIG. 3 is a drawing illustrating a criterion of determining whether to hand over control authority in an apparatus for managing control authority transition in a vehicle in some forms of the present disclosure.

Referring to FIG. 3, the vehicle in some forms of the present disclosure may determine a state of its driver and reliability of a control input by the driver. The vehicle may verify whether the driver is conscious and sits in the driver's seat. When it is verified that the driver is conscious and sits in the driver's seat, the vehicle may determine the reliability of the control input. When the reliability of the control input is high, the vehicle may immediately hand over control authority to the driver.

When the reliability of the control input is low, that is, when there is a high risk of collision on an expected path according to the control input, the vehicle may postpone control authority transition. For example, after waiting until the risk of collision on the expected path according to the control input becomes low, the vehicle may hand over control authority to the driver. For another example, when the reliability of the control input is low, the vehicle may make its steering wheel, its decelerator pedal, and/or its accelerator pedal heavy to prevent an accident due to the control input with the low reliability.

When it is verified that the driver sits in the driver's seat, but when it is verified that the driver is drowsy or unconscious (e.g., when pupils of the driver are not recognized), the vehicle may postpone control authority transition.

When it is not verified that the driver sits in the driver's seat, the vehicle may control itself according to a minimum risk maneuver (MRM). The vehicle may perform deceleration driving, stopping driving, or avoidance driving according to a predetermined MRM.

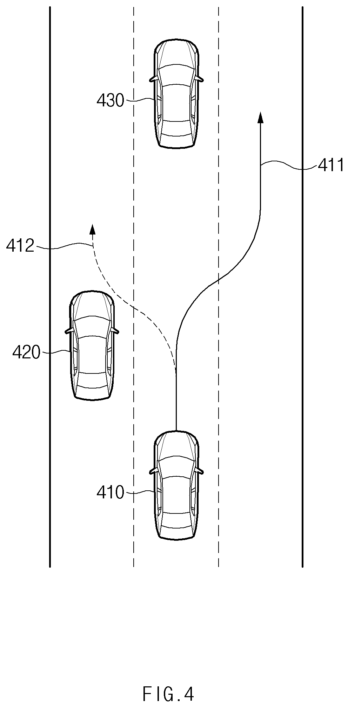

FIG. 4 is a drawing illustrating an exemplary operation of an apparatus for managing control authority transition in a vehicle in some forms of the present disclosure.

Referring to FIG. 4, a vehicle 410 in some forms of the present disclosuremay travel on a second lane of a road. The vehicle 310 may travel along the center of the second lane. For example, a driver of the vehicle 410 may provide a first steering input such that the vehicle 410 is headed toward a right lane. The vehicle 410 may calculate a first expected path 411 according to the first steering input. There may be a low probability of collision (or no probability of collision) on the first expected path 411. Thus, reliability of the first steering input may be high. When the driver is conscious upon the detection of the first steering input, the vehicle 410 may hand over control authority to the driver.

For another example, the driver of the vehicle 410 may provide a second steering input such that the vehicle 410 is headed toward a left lane. The vehicle 410 may calculate a second expected path 412 according to the second steering input. There may be a high probability (a probability) of collision on the second expected path 412 due to an external object 420. Thus, reliability of the second steering input may be low. Although the driver is conscious when detecting the second steering input, the vehicle 410 may postpone control authority transition.

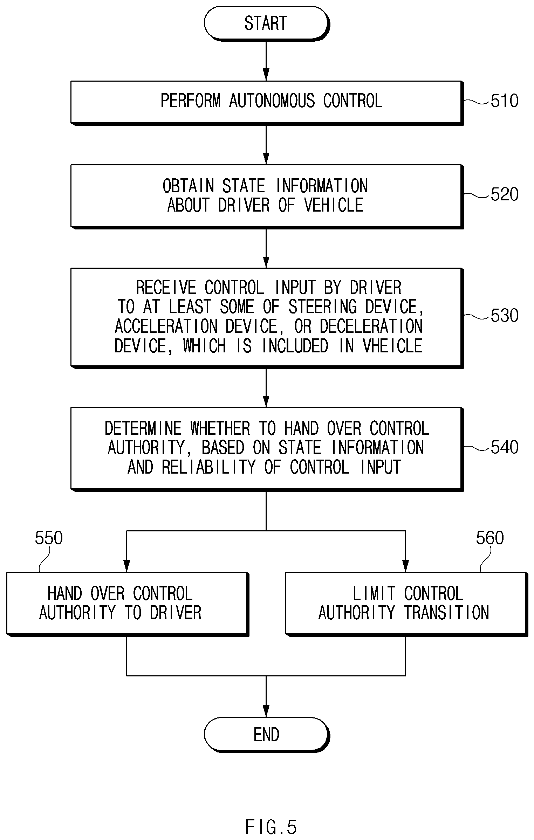

FIG. 5 is a flowchart illustrating a method for managing control authority transition in a vehicle in some forms of the present disclosure.

Hereinafter, it is assumed that a vehicle including an apparatus 100 for managing control authority transition in FIG. 1 performs a process of FIG. 5. Furthermore, in a description of FIG. 5, an operation described as being performed by the vehicle may be understood as being controlled by a control circuit 160 of the apparatus 100 for managing control authority transition.

Referring to FIG. 5, in operation 510, the vehicle may perform autonomous control. In operation 520, the vehicle may obtain state information about its driver. In operation 530, the vehicle may receive a control input by the driver to at least some of a steering device, an acceleration device, or a deceleration device, which is included in the vehicle. In operation 540, the vehicle may determine whether to hand over control authority, based on the state information and reliability of the control input. When it is determined that the control authority is handed over, in operation 550, the vehicle may hand over the control authority to the driver. When it is determined that the control authority is not handed over, in operation 560, the vehicle may prohibit control authority transition.

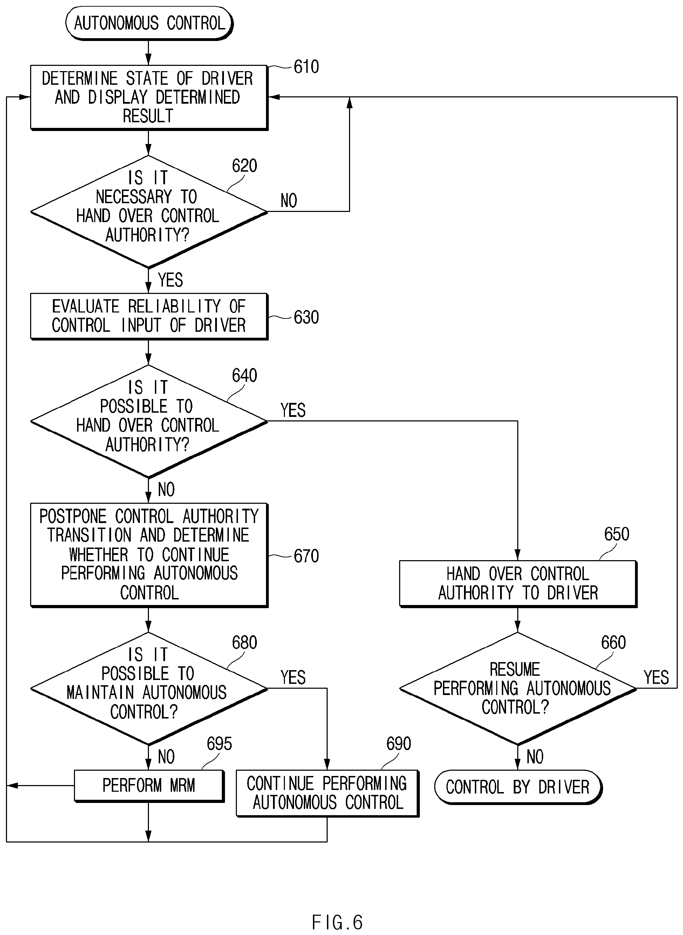

FIG. 6 is a flowchart illustrating a method for managing control authority transition in a vehicle in some forms of the present disclosure.

Hereinafter, it is assumed that a vehicle including an apparatus 100 for managing control authority transition in FIG. 1 performs a process of FIG. 6. Furthermore, in a description of FIG. 6, an operation described as being performed by the vehicle may be understood as being controlled by a control circuit 160 of the apparatus 100 for managing control authority transition.

Referring to FIG. 6, while performing autonomous control, the vehicle may determine a state of its driver and may display the determined result. For example, the vehicle may determine the state of the driver as a first state, a second state, a third state, or a fourth state, which is described with reference to FIG. 2.

In operation 620, the vehicle may determine whether it is necessary to hand over control authority. For example, when a control input by the driver is detected or when a critical situation occurs, the vehicle may determine that it is necessary to hand over the control authority.

When it is necessary to hand over the control authority, in operation 630, the vehicle may evaluate reliability of a control input of the driver. The control input may include, for example, a steering input, an acceleration input, and/or a deceleration input. The vehicle may predict a probability of collision according to the control input and may evaluate the reliability based on the predicted probability of collision.

In operation 640, the vehicle may determine whether it is possible to hand over the control authority. For example, the vehicle may consider the state of the driver and the reliability of the control input on an overall basis to determine whether a current situation is a situation capable of handing over the control authority.

When it is possible to hand over the control authority, in operation 650, the vehicle may hand over the control authority to the driver.

In operation 660, the vehicle may determine whether to resume performing the autonomous control. For example, when the control input of the driver is stopped or when activation of an autonomous system is requested via a separate input device, the vehicle may automatically resume performing the autonomous control for use. For another example, when the control input of the driver is kept, the vehicle may continue performing control by the driver.

When it is impossible to hand over the control authority, in operation 670, the vehicle may postpone control authority transition and may determine whether to continue performing the autonomous control. In operation 680, the vehicle may determine whether it is possible to maintain the autonomous control.

When it is possible to maintain the autonomous control, in operation 690, the vehicle may continue performing the autonomous control. When it is impossible to maintain the autonomous control, in operation 695, the vehicle may perform an MRM.

Independently of the above-mentioned operations, when a TD is received via the separate input device from the driver, the vehicle may compulsorily hand over the control authority to the driver.

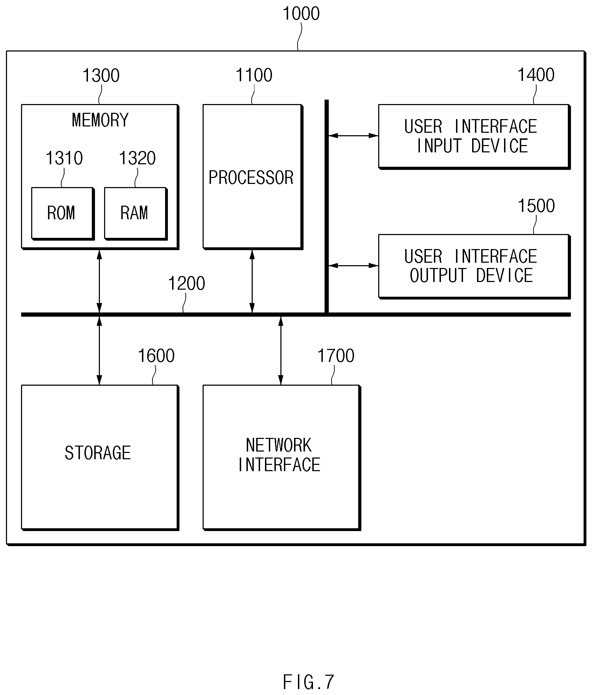

FIG. 7 is a block diagram illustrating a configuration of a computing system in some forms of the present disclosure.

Referring to FIG. 7, a computing system 1000 may include at least one processor 1100, a memory 1300, a user interface input device 1400, a user interface output device 1500, a storage 1600, and a network interface 1700, which are connected with each other via a bus 1200.

The processor 1100 may be a central processing unit (CPU) or a semiconductor device for performing processing of instructions stored in the memory 1300 and/or the storage 1600. Each of the memory 1300 and the storage 1600 may include various types of volatile or non-volatile storage media. For example, the memory 1300 may include a read only memory (ROM) and a random access memory (RAM).

Thus, the operations of the methods or algorithms described in some forms of the present disclosuredisclosed in the specification may be directly implemented with a hardware module, a software module, or combinations thereof, executed by the processor 1100. The software module may reside on a storage medium (i.e., the memory 1300 and/or the storage 1600) such as a RAM, a flash memory, a ROM, an erasable and programmable ROM (EPROM), an electrically EPROM (EEPROM), a register, a hard disc, a removable disc, or a compact disc-ROM (CD-ROM). An exemplary storage medium may be coupled to the processor 1100. The processor 1100 may read out information from the storage medium and may write information in the storage medium. Alternatively, the storage medium may be integrated with the processor 1100. The processor and storage medium may reside in an application specific integrated circuit (ASIC). The ASIC may reside in a user terminal. Alternatively, the processor and storage medium may reside as a separate component of the user terminal.

The apparatus and method in some forms of the present disclosure may prevent unintended critical control (e.g., an error input or the like) and may safely hand over control authority to a driver in the situation where the safety of the driver is ensured, by determining whether to hand over the control authority in consideration of a state of the driver and the reliability of a control input by the driver.

In addition, various effects directly or indirectly ascertained through the present disclosure may be provided.

The description of the invention is merely exemplary in nature and the scope of the invention is defined by the following claims.

## Claims

1. An apparatus for managing control authority transition in a vehicle, the apparatus comprising:
a steering device (110);
an acceleration device (120);
a deceleration device (130);
a sensor (140) configured to sense information about a driver of the vehicle; and
a control circuit (160) configured to be electrically connected with the steering device (110), the acceleration device (120), the deceleration device (130), and the sensor (140),
wherein the control circuit (160) is configured to:
obtain state information about the driver using the sensor (140) when performing an autonomous control;
receive, from the driver, a control input to at least one of the steering device (110), the acceleration device (120), or the deceleration device (130);
calculate an expected path of the vehicle based on the control input;
determine a probability of collision of the vehicle based on the expected path and a location of an external object;
verify whether the driver is conscious and sits in the driver's seat;
when it is verified that the driver is conscious and sits in the driver's seat, determine a reliability of the control input, wherein the reliability of the control input is determined as being high, when there is no probability of collision or the determined probability of collision is lower than a risk of collision on a path by the autonomous control;
determine whether to transfer a control authority based on the state information and the reliability of the control input; and
transfer, to the driver, the control authority, when it is determined to transfer the control authority, when the reliability of the control input is high.

2. The apparatus of claim 1, wherein the sensor (140) comprises a camera, and
wherein the control circuit (160) is configured to:
obtain the state information by analyzing an image of the driver that is obtained by the camera.

3. The apparatus of claim 1 or 2, wherein the state information comprises information regarding a sight of the driver and information regarding a seating of the driver.

4. The apparatus of claim 1, 2 or 3, wherein the reliability of the control input comprises information regarding the probability of collision by the control input.

5. The apparatus of one of claims 1 to 4, wherein the control circuit (160) is configured to:
not transfer the control authority when it is not possible to transfer the control authority.

6. The apparatus of one of claims 1 to 5, wherein the apparatus further comprises:
an input device (150) configured to be electrically connected with the control circuit (160),
wherein the control circuit (160) is configured to:
immediately transfer, to the driver, the control authority when an input to transfer the control authority is received via the input device (150).

7. The apparatus of one of claims 1 to 6, wherein the apparatus further comprises:
the input device (150) configured to be electrically connected with the control circuit (160),
wherein the control circuit (160) is configured to:
resume the autonomous control, after the control authority is transferred, when the control input of the driver is stopped or when an input for the autonomous control is received via the input device (150).

8. The apparatus of one of claims 1 to 7, wherein the control circuit (160) is configured to:
transfer, to the driver, the control authority when pupils of the driver and the seating of the driver seating are detected and when there is no probability of collision by the control input.

9. The apparatus of one of claims 1 to 8, wherein the control circuit (160) is configured to:
not transfer the control authority, when the pupils of the driver and the seating of the driver are detected and when there is a probability of collision by the control input.

10. The apparatus of one of claims 1 to 9, wherein the control circuit (160) is configured to:
not transfer the control authority when the pupils of the driver are not detected.

11. The apparatus of one of claims 1 to 10, wherein the control circuit (160) is configured to:
perform the autonomous control based on a predetermined minimum risk maneuver (MRM) when the seating of the driver seating not detected.

12. A method for managing control authority transition in a vehicle, the method comprising:
obtaining, with a control circuit (160), state information about a driver of the vehicle when performing an autonomous control;
receiving, with the control circuit (160), a control input by the driver to at least one of a steering device (110), an acceleration device (120), or a deceleration device (130), wherein the steering device (110), the acceleration device (120), and the deceleration device (130) are included in the vehicle;
calculate an expected path of the vehicle based on the control input;
determine a probability of collision of the vehicle based on the expected path and a location of an external object;
verifying, with the control circuit (160), whether the driver is conscious and sits in the driver's seat;
when it is verified that the driver is conscious and sits in the driver's seat, determining, with the control circuit (160), a reliability of the control input, wherein the reliability of the control input is determined as being high, when there is no probability of collision or the determined probability of collision is lower than a risk of collision on a path by the autonomous control;
determining, with the control circuit (160), whether to transfer a control authority based on the state information and the reliability of the control input; and
when the reliability of the control input is high and the control authority is determined to transfer, transferring, with the control circuit (160), the control authority to the driver.

13. The method of claim 12, wherein the state information comprises information regarding a sight of the driver and information regarding a seating of the driver.

14. The method of claim 12 or 13, wherein the reliability of the control input comprises information regarding the probability of collision by the control input.

## Patentansprüche

1. Einrichtung zur Verwaltung des Kontrollauthoritätsübergangs in einem Fahrzeug, wobei die Einrichtung Folgendes umfasst:
eine Lenkvorrichtung (110);
eine Beschleunigungsvorrichtung (120);
eine Verzögerungsvorrichtung (130);
einen Sensor (140), der konfiguriert ist, um Informationen über einen Fahrer des Fahrzeugs zu erfassen; und
eine Steuerschaltung (160), die konfiguriert ist, um mit der Lenkvorrichtung (110), der Beschleunigungsvorrichtung (120), der Verzögerungsvorrichtung (130) und dem Sensor (140) elektrisch verbunden zu sein,
wobei die Steuerschaltung (160) konfiguriert ist zum:
Erhalten von Zustandsinformationen über den Fahrer unter Verwendung des Sensors (140), wenn eine autonome Steuerung durchgeführt wird;
Empfangen, vom Fahrer, einer Steuereingabe an mindestens eine aus der Lenkvorrichtung (110), der Beschleunigungsvorrichtung (120) oder der Verzögerungsvorrichtung (130);
Berechnen eines erwarteten Pfads des Fahrzeugs basierend auf der Steuereingabe;
Bestimmen einer Kollisionswahrscheinlichkeit des Fahrzeugs basierend auf dem erwarteten Pfad und einem Standort eines externen Objekts;
Verifizieren, ob der Fahrer bei Bewusstsein ist und auf dem Fahrersitz sitzt;
wenn verifiziert wird, dass der Fahrer bei Bewusstsein ist und auf dem Fahrersitz sitzt, Bestimmen einer Zuverlässigkeit der Steuereingabe, wobei die Zuverlässigkeit der Steuereingabe als hoch bestimmt wird, wenn es keine Kollisionswahrscheinlichkeit gibt oder die bestimmte Kollisionswahrscheinlichkeit geringer ist als ein Kollisionsrisiko auf einem Pfad durch die autonome Steuerung;
Bestimmen, ob eine Kontrollauthorität übertragen werden soll, basierend auf den Zustandsinformationen und der Zuverlässigkeit der Steuereingabe; und
Übertragen, an den Fahrer, der Kontrollauthorität, wenn bestimmt wird, dass die Kontrollauthorität übertragen werden soll, wenn die Zuverlässigkeit der Steuereingabe hoch ist.

2. Einrichtung nach Anspruch 1, wobei der Sensor (140) eine Kamera umfasst, und
wobei die Steuerschaltung (160) konfiguriert ist zum:
Erhalten von den Zustandsinformationen, durch Analysieren eines Bildes des Fahrers, das von der Kamera erhalten wird.

3. Einrichtung nach Anspruch 1 oder 2, wobei die Zustandsinformationen Informationen betreffend die Sicht des Fahrers und Informationen betreffend einen Sitz des Fahrers umfassen.

4. Einrichtung nach Anspruch 1, 2 oder 3, wobei die Zuverlässigkeit der Steuereingabe Informationen betreffend die Kollisionswahrscheinlichkeit durch die Steuereingabe umfasst.

5. Einrichtung nach einem der Ansprüche 1 bis 4, wobei die Steuerschaltung (160) konfiguriert ist zum:
nicht Übertragen der Kontrollauthorität, wenn es nicht möglich ist, die Kontrollauthorität zu übertragen.

6. Einrichtung nach einem der Ansprüche 1 bis 5, wobei die Einrichtung weiter Folgendes umfasst:
eine Eingabevorrichtung (150), die konfiguriert ist, um elektrisch mit der Steuerschaltung (160) verbunden zu werden,
wobei die Steuerschaltung (160) konfiguriert ist zum:
sofortigen Übertragen, an den Fahrer, der Kontrollauthorität, wenn eine Eingabe zum Übertragen der Kontrollauthorität über die Eingabevorrichtung (150) empfangen wird.

7. Einrichtung nach einem der Ansprüche 1 bis 6, wobei die Einrichtung weiter Folgendes umfasst:
die Eingabevorrichtung (150), die konfiguriert ist, um mit der Steuerschaltung (160) elektrisch verbunden zu werden,
wobei die Steuerschaltung (160) konfiguriert ist zum:
wieder Aufnehmen der autonomen Steuerung, nachdem die Kontrollauthorität übertragen wurde, wenn die Steuereingabe des Fahrers gestoppt wird oder wenn eine Eingabe für die autonome Steuerung über die Eingabevorrichtung (150) empfangen wird.

8. Einrichtung nach einem der Ansprüche 1 bis 7, wobei die Steuerschaltung (160) konfiguriert ist zum:
Übertragen, an den Fahrer, der Kontrollauthorität, wenn Pupillen des Fahrers und der Sitz des sitzenden Fahrers detektiert werden und wenn durch die Steuereingabe keine Kollisionswahrscheinlichkeit besteht.

9. Einrichtung nach einem der Ansprüche 1 bis 8, wobei die Steuerschaltung (160) konfiguriert ist zum:
nicht Übertragen der Kontrollauthorität, wenn die Pupillen des Fahrers und der Sitz des Fahrers detektiert werden und wenn eine Kollisionswahrscheinlichkeit durch die Steuereingabe besteht.

10. Einrichtung nach einem der Ansprüche 1 bis 9, wobei die Steuerschaltung (160) konfiguriert ist zum:
nicht Übertragen der Kontrollauthorität, wenn die Pupillen des Fahrers nicht detektiert werden.

11. Einrichtung nach einem der Ansprüche 1 bis 10, wobei die Steuerschaltung (160) konfiguriert ist zum:
Durchführen der autonomen Steuerung basierend auf einem vorbestimmten Minimum-Risiko-Manöver (MRM), wenn der Sitz des sitzenden Fahrers nicht detektiert wird.

12. Verfahren zur Verwaltung des Kontrollauthoritätsübergangs in einem Fahrzeug, wobei das Verfahren Folgendes umfasst:
Erhalten, mit einer Steuerschaltung (160), von Zustandsinformationen über einen Fahrer des Fahrzeugs, wenn eine autonome Steuerung durchgeführt wird;
Empfangen, mit der Steuerschaltung (160), einer Steuereingabe durch den Fahrer an mindestens einer aus einer Lenkvorrichtung (110), einer Beschleunigungsvorrichtung (120) oder einer Verzögerungsvorrichtung (130), wobei die Lenkvorrichtung (110), die Beschleunigungsvorrichtung (120) und die Verzögerungsvorrichtung (130) in das Fahrzeug eingeschlossen sind;
Berechnen eines erwarteten Pfads des Fahrzeugs basierend auf der Steuereingabe;
Bestimmen einer Kollisionswahrscheinlichkeit des Fahrzeugs basierend auf dem erwarteten Pfad und einem Standort eines externen Objekts;
Verifizieren, mit der Steuerschaltung (160), ob der Fahrer bei Bewusstsein ist und auf dem Fahrersitz sitzt;
wenn verifiziert wird, dass der Fahrer bei Bewusstsein ist und auf dem Fahrersitz sitzt, Bestimmen, mit der Steuerschaltung (160), einer Zuverlässigkeit der Steuereingabe, wobei die Zuverlässigkeit der Steuereingabe als hoch bestimmt wird, wenn es keine Kollisionswahrscheinlichkeit gibt oder die bestimmte Kollisionswahrscheinlichkeit geringer ist als ein Kollisionsrisiko auf einem Pfad durch die autonome Steuerung;
Bestimmen, mit der Steuerschaltung (160), ob eine Kontrollauthorität basierend auf den Zustandsinformationen und der Zuverlässigkeit der Steuereingabe übertragen werden soll; und
wenn die Zuverlässigkeit der Steuereingabe hoch ist und bestimmt wird, dass die Kontrollauthorität übertragen werden soll, Übertragen, mit der Steuerschaltung (160), der Kontrollauthorität an den Fahrer.

13. Verfahren nach Anspruch 12, wobei die Zustandsinformationen Informationen betreffend die Sicht des Fahrers und Informationen betreffend einen Sitz des Fahrers umfassen.

14. Verfahren nach Anspruch 12 oder 13, wobei die Zuverlässigkeit der Steuereingabe Informationen betreffend die Kollisionswahrscheinlichkeit durch die Steuereingabe umfasst.

## Revendications

1. Appareil de gestion de transition de l'autorité de commande dans un véhicule, l'appareil comprenant :
un dispositif de conduite (110) ;
un dispositif d'accélération (120) ;
un dispositif de décélération (130) ;
un capteur (140) configuré pour détecter des informations sur un conducteur du véhicule ; et
un circuit (160) de commande configuré pour être connecté électriquement avec le dispositif de conduite (110), le dispositif d'accélération (120), le dispositif de décélération (130), et le capteur (140),
dans lequel le circuit (160) de commande est configuré pour :
obtenir des informations d'état sur le conducteur en utilisant le capteur (140) lors de la mise en œuvre d'une commande autonome ;
recevoir, du conducteur, une entrée de commande vers au moins un du dispositif de conduite (110), du dispositif d'accélération (120), ou du dispositif de décélération (130) ;
calculer une trajectoire attendue du véhicule sur la base de l'entrée de commande ;
déterminer une probabilité de collision du véhicule sur la base de la trajectoire attendue et d'une localisation d'un objet externe ;
vérifier si le conducteur est conscient et est assis dans le siège du conducteur ;
lorsqu'il est vérifié que le conducteur est conscient et assis dans le siège du conducteur, déterminer une fiabilité de l'entrée de commande, dans lequel la fiabilité de l'entrée de commande est déterminée comme étant élevée, lorsqu'il n'y a pas de probabilité de collision ou que la probabilité de collision déterminée est inférieure à un risque de collision sur une trajectoire par la commande autonome ;
déterminer s'il y a lieu de transférer une autorité de commande sur la base des informations d'état et de la fiabilité de l'entrée de commande ; et
transférer au conducteur l'autorité de commande, lorsqu'il est déterminé qu'il y a lieu de transférer l'autorité de commande lorsque la fiabilité de l'entrée de commande est élevée.

2. Appareil selon la revendication 1, dans lequel le capteur (140) comprend une caméra, et
dans lequel le circuit (160) de commande est configuré pour :
obtenir les informations d'état en analysant une image du conducteur qui est obtenue par la caméra.

3. Appareil selon la revendication 1 ou 2, dans lequel les informations d'état comprennent des informations concernant une vision du conducteur et des informations concernant une assise du conducteur.

4. Appareil selon la revendication 1, 2 ou 3, dans lequel la fiabilité de l'entrée de commande comprend des informations concernant la probabilité de collision par l'entrée de commande.

5. Appareil selon l'une des revendications 1 à 4, dans lequel le circuit (160) de commande est configuré pour :
ne pas transférer l'autorité de commande lorsqu'il n'est pas possible de transférer l'autorité de commande.

6. Appareil selon l'une des revendications 1 à 5, dans lequel l'appareil comprend en outre :
un dispositif d'entrée (150) configuré pour être électriquement connecté au circuit (160) de commande,
dans lequel le circuit (160) de commande est configuré pour :
transférer immédiatement, au conducteur, l'autorité de commande lorsqu'une entrée de transfert de l'autorité de commande est reçue via le dispositif d'entrée (150).

7. Appareil selon l'une des revendications 1 à 6, dans lequel l'appareil comprend en outre :
le dispositif d'entrée (150) configuré pour être électriquement connecté au circuit (160) de commande,
dans lequel le circuit (160) de commande est configuré pour :
reprendre la commande autonome, après que l'autorité de commande est transférée, lorsque l'entrée de commande du conducteur est arrêtée ou lorsqu'une entrée pour la commande autonome est reçue via le dispositif d'entrée (150).

8. Appareil selon l'une des revendications 1 à 7, dans lequel le circuit (160) de commande est configuré pour :
transférer au conducteur l'autorité de commande lorsque des élèves du conducteur et l'assise du conducteur sont détectés et lorsqu'il n'y a pas de probabilité de collision par l'entrée de commande.

9. Appareil selon l'une des revendications 1 à 8, dans lequel le circuit (160) de commande est configuré pour :
ne pas transférer l'autorité de commande lorsque les élèves du conducteur et l'assise du conducteur sont détectés et lorsqu'il y a une probabilité de collision par l'entrée de commande.

10. Appareil selon l'une des revendications 1 à 9, dans lequel le circuit (160) de commande est configuré pour :
ne pas transférer l'autorité de commande lorsque les élèves du conducteur ne sont pas détectés.

11. Appareil selon l'une des revendications 1 à 10, dans lequel le circuit (160) de commande est configuré pour :
mettre en oeuvre la commande autonome sur la base d'une manoeuvre à risque minimum (MRM) prédéterminée lorsque l'assise du conducteur n'est pas détectée.

12. Procédé de gestion de transition de l'autorité de commande dans un véhicule, le procédé comprenant :
l'obtention, avec un circuit (160) de commande, d'informations d'état sur un conducteur du véhicule lors de la mise en œuvre d'une commande autonome ;
la réception, avec le circuit (160) de commande, d'une entrée de commande par le conducteur vers au moins un d'un dispositif de conduite (110), d'un dispositif d'accélération (120), ou d'un dispositif de décélération (130), dans lequel le dispositif de conduite (110), le dispositif d'accélération (120), et le dispositif de décélération (130) sont inclus dans le véhicule ;
calculer une trajectoire attendue du véhicule sur la base de l'entrée de commande ;
déterminer une probabilité de collision du véhicule sur la base de la trajectoire attendue et d'une localisation d'un objet externe ;
vérifier, avec le circuit (160) de commande, si le conducteur est conscient et est assis dans le siège du conducteur ;
lorsqu'il est vérifié que le conducteur est conscient et assis dans le siège du conducteur, déterminer, avec le circuit (160) de commande, une fiabilité de l'entrée de commande, dans lequel la fiabilité de l'entrée de commande est déterminée comme étant élevée, lorsqu'il n'y a pas de probabilité de collision ou que la probabilité de collision déterminée est plus faible qu'un risque de collision sur une trajectoire par la commande autonome ;
déterminer, avec le circuit (160) de commande, s'il y a lieu de transférer une autorité de commande sur la base des informations d'état et de la fiabilité de l'entrée de commande ; et
lorsque la fiabilité de l'entrée de commande est élevée et que l'autorité de commande a été déterminée comme étant à transférer, transférer, avec le circuit (160) de commande, l'autorité de commande au conducteur.

13. Procédé selon la revendication 12, dans lequel les informations d'état comprennent des informations concernant une vision du conducteur et des informations concernant une assise du conducteur.

14. Procédé selon la revendication 12 ou 13, dans lequel la fiabilité de l'entrée de commande comprend des informations concernant la probabilité de collision par l'entrée de commande.
